Europäisches Patentamt

European Patent Office

Office européen des brevets

(19)

(11) Veröffentlichungsnummer: **0 202 599 B1**

(12) **EUROPÄISCHE PATENTSCHRIFT**

(45) Veröffentlichungstag der Patentschrift: **08.01.92**

(21) Anmeldenummer: **86106572.0**

(22) Anmeldetag: **14.05.86**

(51) Int. Cl.⁵: **G01N 1/28**, B01L 7/00, B01L 1/00, F25D 3/10

(54) **Kühlkammer zum Bearbeiten von Objekten für mikroskopische oder elektronenmikroskopische Untersuchungen.**

(30) Priorität: **15.05.85 DE 3517518**

(43) Veröffentlichungstag der Anmeldung: **26.11.86 Patentblatt 86/48**

(45) Bekanntmachung des Hinweises auf die Patenterteilung: **08.01.92 Patentblatt 92/02**

(84) Benannte Vertragsstaaten: **AT CH DE GB LI SE**

(56) Entgegenhaltungen:
AT-B- 343 941     CH-A- 526 081
DE-A- 2 906 153    DE-A- 2 944 806
DE-B- 2 721 862    GB-A- 2 042 704

(73) Patentinhaber: **Firma Carl Zeiss**

**W-7920 Heidenheim (Brenz)(DE)**
(84) Benannte Vertragsstaaten:
**CH DE LI SE AT**

Patentinhaber: **CARL ZEISS-STIFTUNG HANDELND ALS CARL ZEISS**

**W-7920 Heidenheim (Brenz)(DE)**
(84) Benannte Vertragsstaaten:
**GB**

(72) Erfinder: **Hoffmeister, Dietrich Holunderrain 10 W-7082 Oberkochen(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft eine Kühlkammer zum Bearbeiten von Objekten für mikroskopische oder elektronenmikroskopische Untersuchungen, bestehend aus einer Arbeitskammer, einem Kühlmittelgefäß und einem Isoliergefäß, wobei ein Teil der Wände des Kühlmittelgefäßes zugleich Wände der Arbeitskammer sind, bei der ferner Arbeitskammer und Kühlmittelgefäß vom Isoliergefäß umgeben sind und verdampftes Kühlmittel in die Arbeitskammer geleitet wird.

Für mikroskopische und elektronenoptische Untersuchungen insbesondere von biologischen Objekten, benötigt man in zunehmendem Maße Präparationskammern, in denen sowohl die Objekte als auch die Werkzeuge auf tiefe Temperaturen gebracht und gehalten werden können (sog. Kryopräparation). Dabei dürfen weder die Objekte noch die Werkzeuge infolge von Niederschlägen der Luftfeuchtigkeit vereisen. In den meisten Fällen wird zur Kühlung flüssiger Stickstoff verwendet.

Aus der DE-OS 29 06 153 ist eine Kühlkammer bekannt, bei welcher die Arbeitskammer aus einem quaderförmigen Gefäß aus gut wärmeleitendem Metallblech besteht. Diese Arbeitskammer ist über Füße in einem größeren, ebenfalls quaderförmigen Kühlmittelgefäß befestigt, welches das Kühlmittel aufnimmt und seinerseits in einem Isoliergefäß aus geschäumtem Kunststoff sitzt. Letzteres ist von einem Metallgehäuse umgeben. Das im Kühlmittelgefäß verdampfte Kühlmittel wird durch Kanäle zwischen dem Isoliergefäß und dem Metallgehäuse abgeführt. Damit das Metallgefäß an seiner Außenseite nicht durch die Luftfeuchtigkeit vereist, muß es durch eine elektrische Heizung erwärmt werden. In der Arbeitskammer werden Niederschläge der Luftfeuchtigkeit durch eine laufende Kammerspülung vermieden, für die Heliumgas durch eine Kühlschlange, welche im Kühlmittelgefäß untergebracht ist, abgekühlt und getrocknet wird. Das Heliumgas strömt am Boden der Arbeitskammer aus und füllt die Arbeitskammer vollständig aus, da sie abgesehen von der oberen Öffnung dicht ausgeführt ist.

Aus der DE-OS 2 944 806 ist ferner bekannt, zur Spülung der Arbeitskammer einen Teil des verdampften Kühlmittels zu verwenden. Dazu sind an den Wänden der Arbeitskammer Bleche vorgesehen, welche das verdampfte Kühlmittel zum Boden der Arbeitskammer führen. Aus dieser Veröffentlichung ist ferner bekannt, die Menge des zur Spülung der Arbeitskammer verdampften Kühlmittels durch eine im Kühlmittel angeordnete elektrische Heizung zu beeinflussen. Auch bei dieser Ausführung ist es notwendig, das Metallgehäuse zu heizen, um Niederschläge der Luftfeuchtigkeit zu vermeiden.

Diese bekannten Kühlkammern haben den Nachteil, daß sie verhältnismäßig große Mengen des Kühlmittels benötigen. Im Falle des meist verwendeten flüssigen Stickstoffes werden ca. 30 l in 5 h verbraucht. Damit sind die laufenden Kosten im Routinebetrieb für die heutigen Anforderungen zu hoch.

Der vorliegenden Erfindung liegt daher die Aufgabe zugrunde, eine Kühlkammer zu schaffen, deren Verbrauch an Kühlmittel möglichst gering ist. Außerdem soll die Kühlkammer möglichst einfach im Aufbau sein, so daß sie preiswert herzustellen ist.

Die gestellte Aufgabe wird erfindungsgemäß dadurch gelöst, daß zwischen dem Isoliergefäß und den Wänden des Kühlmittelgefäßes sowie der Arbeitskammer ein Zwischenraum ist und die Wände nur durch wenige Verbindungsstücke mit dem Isoliergefäß verbunden sind.

In einer vorteilhaften Ausführungsform ist die Arbeitskammer oberhalb des Kühlmittelgefäßes angeordnet und der Boden der Arbeitskammer hat Aussparungen, durch welche das verdampfte Kühlmittel in die Arbeitskammer eindringt und diese ausfüllt.

In einer besonders vorteilhaften Ausführungsform ist auf der Oberseite der Arbeitskammer ein verschiebbarer Deckel angeordnet, der im geöffneten Zustand einen Kontakt schließt, über den eine Heizung innerhalb des Kühlmittels eingeschaltet wird. Diese Heizung ist so dimensioniert, daß der durch die Öffnung des Kammerraumes eintretende größere Wärmezustrom durch das infolge der Heizung zusätzlich verdampfte Kühlmittel kompensiert wird. Außerdem wird dadurch die kondensierende Luftfeuchtigkeit vollständig fortgeschwemmt, welche in der Grenzschicht zwischen Luft und verdampftem Kühlmittel in der Höhe der Öffnung entsteht.

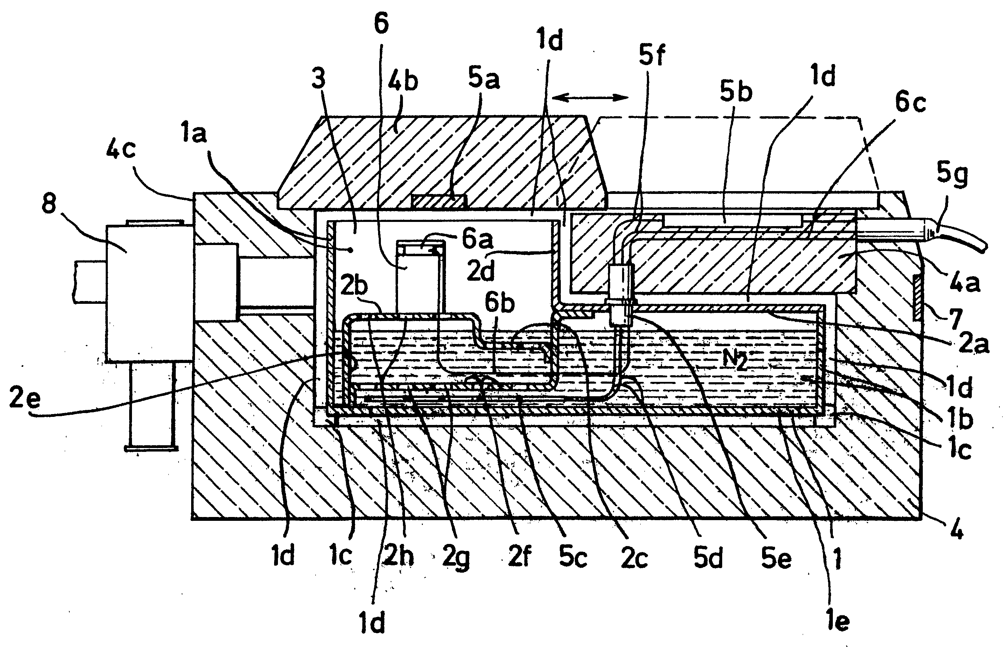

Weitere vorteilhafte Ausgestaltungen der Erfindung gehen aus den abhängigen Ansprüchen und den Erläuterungen zu der Figur hervor.

Die Erfindung wird im folgenden anhand eines Ausführungsbeispieles näher erläutert, das in der einzigen Figur im Schnitt dargestellt ist.

In diesem Ausführungsbeispiel ist mit 1 ein quaderförmiges Kühlmittelgefäß bezeichnet, das z.B. aus Niro-Stahl hergestellt ist. Seine im linken Teil mit 1a bezeichneten Seitenwände gehen bis zur oberen Grenze der Arbeitskammer 3, während die im rechten Teil mit 1b bezeichneten Seitenwände nur ungefähr bis zur halben Höhe gehen. Dieses Kühlmittelgefäß nimmt das Kühlmittel, also z.B. den mit $N_2fl$ bezeichneten flüssigen Stickstoff auf und ist am Boden 1e über möglichst wenige, schlecht wärmeleitende Füße 1c mit dem Isoliergefäß 4 verbunden. Letzteres kann z.B. aus Polyurethanschaum sein und hat dann zweckmäßigerweise eine Wandstärke von 4 bis 5 cm. Zwischen dem Kühlmittelgefäß 1 und dem Isoliergefäß 4 ist ein ca. 5mm breiter Zwischenraum 1d. Dieser bewirkt zusammen mit dem Isoliergefäß 4 eine so gute thermische Isolierung, daß an der Außenwand 4c des Isoliergefäßes keine Luftfeuchtigkeit kondensiert und der Kühlmittelverbrauch bei ca. 1 l in 1 1/2 bis 4 h liegt, also sehr klein ist.

In bzw. auf das Kühlmittelgefäß 1 ist ein Teil ein- bzw. aufgesetzt, das aus den Abschnitten 2a bis 2f besteht und ebenfalls z.B. aus Niro-Stahl ist. Der Abschnitt 2a bildet über dem rechten Teil des Kühlmittelgefäßes 1 eine obere Abdeckung. Die Abschnitte 2b und 2c wirken als Boden für die Arbeitskammer 3, wobei der Teil 2c einen direkten Kontakt mit dem Kühlmittel ermöglicht. Der Abschnitt 2d bildet die vierte Seitenwand der Arbeitskammer 3, der Abschnitt 2e wirkt als Auflage und der Abschnitt 2f bildet die Montagefläche für die Heizdrähte 5c. Die Arbeitskammer 3 ist also von vier Seitenwänden und einer Bodenfläche umgeben, die alle Kontakt mit dem Kühlmittel $N_2$fl haben. Durch über den ganzen Boden gleichmäßig verteilte Aussparungen 2h strömt das verdampfte Kühlmittel in die Arbeitskammer 3 und füllt diese (da es schwerer als Luft ist) vollständig aus. Auch die Zwischenräume 1d werden von dem verdampften Kühlmittel ausgefüllt.

Auf der rechten Seite neben der Arbeitskammer 3 ist oberhalb des Kühlmittelgefäßes 1 und seiner oberen Abdeckung 2a ebenfalls in einem Abstand 1d von ca. 5mm das Isoliergefäß 4 durch das Isolierteil 4a verschlossen. Dieses Teil 4a ist herausnehmbar ausgeführt, so daß die Kühlkammer leicht auseinandergenommen werden kann. Oberhalb der Arbeitskammer 3 ist ein nach rechts verschiebbarer Deckel 4b angeordnet, der ebenfalls aus Polyurethanschaum ist und eine Dicke von 4 bis 5 cm hat. Wenn in der Arbeitskammer 3 irgendwelche Manipulationen ausgeführt werden sollen, wird der Deckel 4b nach rechts geschoben. Dadurch kommt der an seiner Unterseite sitzende Magnet 5a über den Reedkontakt 5b im Isolierteil 4a. Bei geöffnetem Deckel 4b wird daher der Reedkontakt 5b geschlossen und damit die Heizung eingeschaltet. Diese Heizung besteht aus Drähten 5c, welche unter dem mit Aussparungen 2g versehenem Abschnitt 2f gespannt sind. Sie sind über die Leitungen 5d, einen Stecker 5e, die Leitungen 5f sowie den Reedkontakt 5b und die Kabelausführung 5g mit einer externen Stromquelle verbunden. Bei eingeschalteter Heizung wird zusätzlich Kühlmittel verdampft und damit die durch den geöffneten Deckel erhöhte Wärmezufuhr kompensiert. Außerdem wird durch das zusätzlich verdampfte Kühlmittel die kondensierende Luftfeuchtigkeit vollständig fortgeschwemmt, welche in der Grenzschicht zwischen Luft und verdampftem Kühlmittel in der Höhe der Öffnung entsteht.

In der Arbeitskammer 3 befindet sich in einem umsetzbaren Halter 6 ein Platin-Widerstandsthermometer 6a, dessen Anschlüsse über die zweiadrige Leitung 6b, den Stecker 5e, die Leitung 6c und die Kabelausführung 5g zu einem externen Meßgerät für die Temperatur in der Arbeitskammer 3 führen.

An das Isoliergefäß 4 ist außen ein Metallband 7 angebracht, in dem z.B. Gewindelöcher enthalten sind und an dem die in der Kryotechnik üblichen Arbeits- und Beobachtungsgeräte angebracht werden können, sofern sie nicht unmittelbar in die Arbeitskammer 3 eingesetzt werden. Schließlich hat die Kühlkammer auch eine Schleuse 8, die in bekannter Weise ausgeführt ist und die Überführung der Probe in einen Transferbehälter ermöglicht, ohne sie höheren Temperaturen und der (feuchten) Zimmerluft auszusetzen.

## Patentansprüche

1.  Kühlkammer zum Bearbeiten von Objekten für mikroskopische oder elektronenmikroskopische Untersuchungen, bestehend aus einer Arbeitskammer (3) einem Kühlmittelgefäß (1) und einem Isoliergefäß (4), wobei ein Teil (1a,2b,2c) der Wände des Kühlmittelgefäßes (1) zugleich Wände der Arbeitskammer (3) sind, bei der ferner Arbeitskammer (3) und Kühlmittelgefäß (1) vom Isoliergefäß (4) umgeben sind und verdampftes Kühlmittel in die Arbeitskammer (3) geleitet wird, dadurch gekennzeichnet, daß zwischen dem Isoliergefäß (4) und den Wänden (1a,1b,1e,2a,2d) des Kühlmittelgefäßes (1) bzw. der Arbeitskammer (3) ein Zwischenraum (1d) ist und die Wände (1a,1b,1e,2a,2d) nur durch wenige Verbindungsstücke (1c) mit dem Isoliergefäß (4) verbunden sind.

2.  Kühlkammer nach Anspruch 1, dadurch gekennzeichnet, daß die Arbeitskammer (3) oberhalb des Kühlmittelgefäßes (1) angeordnet ist und daß der Boden (2b,2c) der Arbeitskammer (3) Aussparungen (2h) hat, durch welche das verdampfte Kühlmittel in die Arbeitskammer (3) eindringt und die Arbeitskammer (3) ausfüllt.

3.  Kühlkammer nach Anspruch 2, dadurch gekennzeichnet, daß die Aussparungen (2h) im Boden (2b,2c) der Arbeitskammer (3) mindestens annähernd gleichmäßig verteilt sind.

4.  Kühlkammer nach einem der Ansprüche 1 bis 3, dadurch gekennzeichnet, daß eine Heizung (5c) vorgesehen ist, welche die Verdampfung des Kühlmittels erhöht.

5. Kühlkammer nach Anspruch 4, dadurch gekennzeichnet, daß die Heizung im Kühlmittelgefäß (1) angeordnet und mindestens annähernd gleichmäßig unter dem gesamten Boden (2b,2c) der Arbeitskammer (3) verteilt ist.

6. Kühlkammer nach einem der Ansprüche 1 bis 5, dadurch gekennzeichnet, daß auf der Oberseite der Arbeitskammer (3) ein verschiebbarer Deckel (4b) aus wärmeisolierendem Material angeordnet ist.

7. Kühlkammer nach Anspruch 6, dadurch gekennzeichnet, daß die Heizung (5c) mit einem Schalter (5b) verbunden ist, welcher die Heizung (5c) einschaltet, wenn der Deckel (4b) der Kühlkammer in die geöffnete Stellung geschoben ist.

8. Kühlkammer nach einem der Ansprüche 1 bis 7, dadurch gekennzeichnet, daß in einer Seitenwand eine Schleuse (8) vorgesehen ist.

9. Kühlkammer nach einem der Ansprüche 1 bis 8, dadurch gekennzeichnet, daß das Isoliergefäß (4) mit einem Metallband (7) zum Befestigen von Arbeits- und/oder Beobachtungsgeräten versehen ist.

## Claims

1. Cooling chamber for processing a specimen for microscopic or electron-microscopic investigations consisting of a working chamber (3), a coolant vessel (1) and an insulating vessel (4), whereby some of the walls (1a, 2b, 2c) are common walls of the coolant vessel (1) and the working chamber (3), in which the working chamber (3) and the coolant vessel (1) are surrounded by the insulating chamber (4) and vaporized coolant is led into the working chamber (3), characterized by the fact that an intermediate space (1d) is provided between the insulating chamber (4) and the walls (1a, 1b, 1e, 2a, 2d) of the coolant vessel (1) or the working chamber (3) and that the walls (1a, 1b, 1e, 2a, 2d) are connected to the insulating chamber (4) only by a few connecting parts (1c).

2. Cooling chamber according to claim 1, characterized by the fact that the working chamber (3) is arranged above the coolant vessel (1) and that the base wall (2b, 2c) of the working chamber (3) has apertures (2h) therein to permit the vaporized coolant to pass into the working chamber (3) and to fill the working chamber (3).

3. Cooling chamber according to claim 2, characterized by the fact that the apertures (2h) are distributed at least approximately uniformly in the base wall (2b, 2c) of the working chamber (3).

4. Cooling chamber according to one of the claims 1 to 3, characterized by the fact that a heater (5c) is provided which increases the vaporisation of the coolant.

5. Cooling chamber according to claim 4, characterized by the fact that the heater (5c) is distributed at least approximately uniformly below the overall base wall (2b, 2c) of the working chamber (3).

6. Cooling chamber according to one of the claims 1 to 5, characterized by the fact that a displaceable cover means (4b) of heat-insulating material is arranged at the top side of the working chamber (3).

7. Cooling chamber according to claim 6, characterized by the fact that the heater (5c) is connected to a switch (5b) which switches the heater (5c) on if the cover means (4b) of the cooling chamber is displaced into the opened position.

8. Cooling chamber according to one of the claims 1 to 7, characterized by the fact that a lock means (8) is provided in one of the side walls.

9. Cooling chamber according to one of the claims 1 to 8, characterized by the fact that the insulating chamber (4) is supplied with a metal tape (7) for attachment of working or observation apparatus.

## Revendications

1. Chambre de refroidissement pour la manipulation d'objets destinés à des examens en microscopie optique et électronique, comprenant une chambre de travail (3), un conteneur de l'agent de refroidissement (1) et un récipient isolant (4), où certaines des parois (1a, 2b, 2c) du conteneur de l'agent de refroidissement (1) constituent en même temps les parois de la chambre de travail (3),
et dont la chambre de travail (3) et le conteneur de l'agent de refroidissement (1) sont entourés par le récipient isolant (4) où l'agent de refroidissement vaporisé est conduit dans la chambre de travail (3),
caractérisée en ce qu'il existe une espace intermédiaire (1d) entre le récipient isolant (4) voire la chambre de travail (3) et qu'il n'existe que quelques pièces de liaison (1c) entre les parois (1a, 1b, 1e, 2a, 2d) et le récipient isolant (4).

2. Chambre de refroidissement selon revendication 1,
caractérisée en ce que la chambre de travail (3) est située au-dessus du conteneur de l'agent de refroidissement (1) et que le fond (2b,2c) de la chambre de travail (3) présente des fentes (2h) qui laissent entrer l'agent de refroidissement vaporisé dans la chambre de travail (3) pour remplir cette dernière.

3. Chambre de refroidissement selon revendication 2,
caractérisée en ce que les fentes (2h) dans le fond (2b, 2c) de la chambre de travail (3) sont réparties à peu près régulièrement.

4. Chambre de refroidissement selon l'une des revendications de 1 à 3,
caractérisée en ce qu'un chauffage (5c) est prévu pour intensifier la vaporisation de l'agent de refroidissement.

5. Chambre de refroidissement selon revendication 4,
caractérisée en ce que le chauffage est logé dans le conteneur de l'agent de refroidissement (1) et qu'il s'étend d'une façon à peu près régulière en dessous du fond entier (2b, 2c) de la chambre de travail (3).

6. Chambre de refroidissement selon l'une des revendications de 1 à 5,
caractérisée en ce qu'un couvercle coulissant (4b) d'un matériau d'isolation termique se trouve à la partie supérieure de la chambre de travail (3).

7. Chambre de refroidissement selon revendication 6,
caractérisée en ce que le chauffage (5c) est relié à un interrupteur (5b) qui met en marche le chauffage (5c) lorsque le couvercle coulissant (4b) de la chambre de refroidissement se trouve en position ouverte.

8. Chambre de refroidissement selon l'une des revendications de 1 à 7,
caractérisée en ce que l'une des parois latérales est munie d'un sas (8).

9. Chambre de refroidissement selon l'une des revendications de 1 à 8,
caractérisée en ce que le récipient isolant (4) est muni d'une bande métallique (7) servant à fixer des ustensiles de travail et/ou des appareils d'observation.

EP 0 202 599 B1